# FASCICULE DE BREVET EUROPEEN

(11) **EP 2 114 624 B1**
(45) Date de publication et mention de la délivrance du brevet: **09.03.2011**
(21) Numéro de dépôt: 08701523.6
(22) Date de dépôt: 16.01.2008
(51) Int. Cl.: B25B 23/14, G01L 3/14

(54) **OUTIL DE VISSAGE INCLUANT UN OU PLUSIEURS CAPTEURS DE COUPLE MONTES POUR MESURER DES DEFORMATIONS DANS UN PLAN PERPENDICULAIRE A UN AXE DE REVOLUTION, ET SUPPORT DE CAPTEUR CORRESPONDANT**
SCHRAUBVORRICHTUNG MIT EINEM ODER MEHREREN DREHMOMENTSENSOREN ZUM MESSEN VON VERFORMUNGEN IN EINER SENKRECHT ZUR DREHACHSE VERLAUFENDEN EBENE SOWIE ENTSPRECHENDER SENSORHALTER
SCREWING DEVICE INCLUDING ONE OR MORE TORQUE SENSORS FOR MEASURING DEFORMATIONS IN A PLANE PERPENDICULAR TO THE REVOLUTION AXIS, AND CORRESPONDING SENSOR HOLDER

(30) Priorité: 18.01.2007 FR 0700331
(43) Date de publication de la demande: 11.11.2009
(73) Titulaire: Etablissements Georges Renault, 44800 Saint Herblain (FR)
(72) Inventeur: LE DU, Nicolas, F-29300 Quimperle (FR)
(74) Mandataire: Larcher, Dominique
(86) Numéro de dépôt international: PCT/EP2008/050456
(87) Numéro de publication internationale: WO 2008/090069

(56) Documents cités:
- WO-A-92/18840
- DD-A- 71 214
- DE-A1- 3 422 014
- DE-B1- 2 521 428
- DE-U1- 20 209 850
- GB-A- 2 238 623
- JP-A- 9 029 654
- US-A- 3 728 896

## Description

Le domaine de l'invention est celui de l'outillage. Plus précisément, l'invention concerne l'outillage industriel, et plus particulièrement les outillages prévus pour exercer un vissage avec un couple déterminé.

Dans le domaine de l'invention, les outils de vissage sont très largement utilisés dans le secteur industriel, que les outils soient fixes (ce qui comprend les outils montés sur machines ou sur les manipulateurs) ou portatifs.

Ces outils peuvent intégrer des moyens moteurs électriques ou pneumatiques selon les applications envisagées.

Selon une mise en oeuvre répandue de ces outils, ceux-ci sont reliés par une connectique appropriée à un contrôleur électronique (sous forme d'un coffret) permettant de programmer un nombre important de cycles de fonctionnement (par exemple 250 cycles), chaque cycle pouvant être composé de 20 phases de fonctionnement.

Ces cycles peuvent être programmés directement à partir d'un clavier que comporte le coffret électronique ou par un logiciel de programmation associé (le ou les coffrets étant alors reliés au système de programmation par un réseau de type terrain, Ethernet ou autres).

Ces systèmes permettant d'assurer une traçabilité des opérations effectuées par l'outil, en assurant par exemple l'enregistrement de résultats tels que le couple final de vissage, l'angle final de vissage, la date et l'heure des opérations ou encore les courbes représentatives de la qualité (bonne ou mauvaise, en fonction de paramètres prédéterminés) du vissage effectué.

L'outil lui-même peut également comporter des moyens d'indications de la qualité de vissage, par exemple en fournissant un compte-rendu « Bon/Mauvais » visualisable à l'aide de leds.

On comprend que les systèmes de ce type permettent d'effectuer une gamme étendue d'opérations de paramétrage et de contrôle.

Selon une autre technique connue, l'outil est relié au secteur électrique de façon à alimenter une électronique de commande intégrée à l'outil. Dans ce cas, l'outil dispose d'un petit afficheur et de quelques boutons de commande.

On comprend que, dans l'une ou l'autre des technologies décrites précédemment, les données concernant le couple de serrage sont essentielles pour commander correctement les outils et pour pouvoir obtenir un suivi des résultats de vissage.

En effet, les données sur le couple de serrage sont utilisés à de nombreuses reprises, pour assurer bien entendu la qualité de l'assemblage à réaliser par vissage, mais également pour permettre une traçabilité des opérations et pour procéder à un traitement statistique des données de serrage.

Actuellement, les capteurs de couple mis en oeuvre dans les outils de vissage comprennent des jauges de contraintes (généralement montées en pont).

Ces jauges de contraintes sont montées sur un support (l'ensemble formé par les jauges et le support étant désigné par « capteur de couple ») constitué par un élément cylindrique dont on mesure, par l'intermédiaire des jauges, la déformation en torsion, cette déformation étant traduite en une mesure du couple de serrage.

Classiquement, cet élément cylindrique est associé à un réducteur à train épicycloïdal dont la structure est rappelée ci-après.

Une réduction à train épicycloïdal à un étage comprend :
- un tube avec une couronne interne appelée couronne de réduction ;
- des pignons satellites ;
- un porte-satellite ;
- un solaire.

Le solaire est entraîné par un moteur et constitue l'organe d'entrée du réducteur. Ce solaire entraîne en rotation les satellites qui roulent à l'intérieur de la couronne, les satellites entraînant à leur tour le porte-satellite qui forme l'arbre de sortie du réducteur.

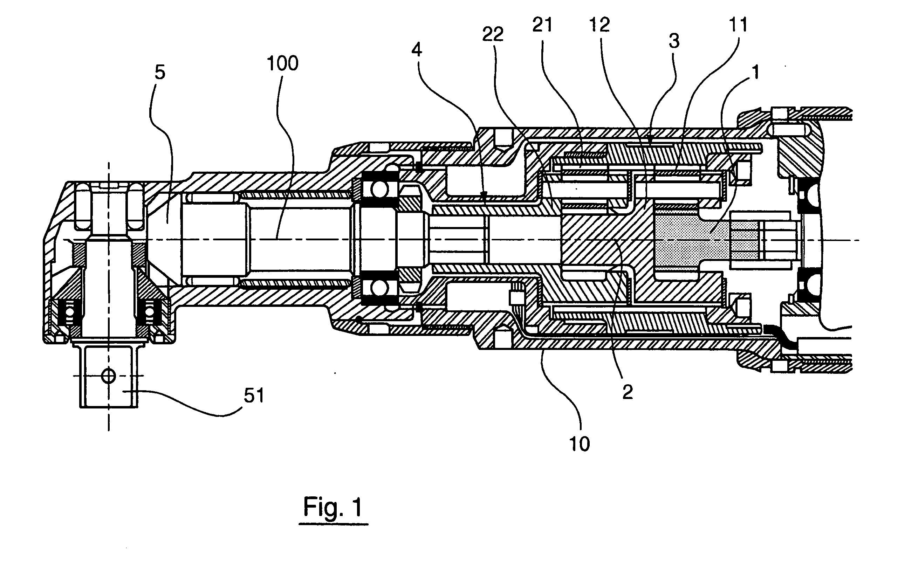

En référence à la figure 1 qui illustre un outil de vissage selon l'art antérieur, les réducteurs épicycloïdaux peuvent présenter deux étages d'engrènement.

Dans ce cas, le premier étage comprend un solaire 1 entraîné par le moteur de l'outil et engrainant avec trois satellites d'entrée 11 montés dans le porte-satellite 12, de dernier étant solidaire du solaire 2 du deuxième étage qui engraine avec trois autres satellites 21 montés dans le porte-satellite 22. L'ensemble est monté dans la couronne 3 avec laquelle les satellites engrainent. Le porte-satellite 22 du deuxième étage entraîne soit l'arbre de sortie de la visseuse dans le cas d'une visseuse droite, soit l'arbre d'entrée d'une tête d'angle dans le cas d'une visseuse d'angle.

Pour assurer le fonctionnement d'un tel réducteur, la couronne 3 est immobilisée en rotation.

L'équilibre mécanique de l'ensemble conduit alors à ce que le couple d'immobilisation de la couronne équivaut au couple de sortie du réducteur moins le couple d'entrée du moteur. Par conséquent, connaissant le couple d'immobilisation de la couronne, on en déduit le couple de sortie de l'outil.

Or, comme déjà mentionné, ce couple de sortie est une donnée essentielle lors du serrage d'une vis par l'outil. Il est donc crucial de mesurer ce couple d'immobilisation.

Cette solution, largement répandue, implique plusieurs inconvénients.

En effet, il est nécessaire que l'élément cylindrique dont on mesure en surface la déformation due à l'effort de torsion présente une longueur suffisante pour :
- permettre une déformation mesurable ;
- disposer d'un espace pour la mise en place de jauges de contraintes.

L'inconvénient d'une telle solution tient donc à la longueur de cet élément cylindrique supportant la ou les jauges de contraintes, dans la mesure où cet élément tend à allonger les dimensions de l'outil qui l'intègre et à en augmenter l'encombrement.

Par ailleurs, le collage des jauges de contraintes sur la partie centrale du support est une opération effectuée manuellement.

Cette opération est malaisée du fait de la forme du support, ce qui entraîne une difficulté qui tend à augmenter les temps de collage de jauges et, par conséquent, le coût de l'opération.

On note que la technique qui vient d'être décrite est appliquée, tel que le montre la figure 1, à une visseuse à tête d'angle, et que cette technique peut de façon similaire être utilisée dans les visseuses droites.

On connaît également des capteurs de couple mis en oeuvre dans des outils de vissage tels que ceux décrits par les documents de brevet publiés sous les numéros EP-0 579 722 EP-1376 086.

Le document EP-0 579 722 décrit un moteur d'entraînement comprenant un transducteur de couple couplé à un train de transmission de sortie placé dans un boîtier de visseuse.

Le train de transmission a une partie flottante qui subit un couple de réaction proportionnel au couple de sortie, la partie flottante ayant un axe de sortie.

Le transducteur de couple comprend un premier organe ayant pratiquement une forme de disque qui est rigidement raccordé à un organe de référence statique du boîtier, et un dispositif de détection et de mesure des fléchissements de torsion.

Le transducteur de couple comporte aussi un second organe ayant pratiquement une forme de disque, couplé par glissement au premier organe ainsi qu'à la partie flottante.

Le second organe est retenu en rotation par rapport à la partie flottante mais étant libre de coulisser le long de son axe de sortie, et comprend un anneau externe et une partie centrale interconnectés par plusieurs joues de cisaillement destinées à concentrer les contraintes de torsion dans une zone comprise entre l'anneau externe et la partie centrale afin qu'elles puissent être détectées par le dispositif de détection et de mesure.

L'anneau externe et la partie centrale sont raccordés respectivement à la partie flottante et au premier organe.

Le dispositif de détection et de mesure des fléchissements de torsion du second organe comporte plusieurs jauges dynanométriques fixées à chaque joue de cisaillement.

Une telle solution impose la fabrication et le montage de plusieurs pièces relativement complexes, ce qui tend à induire des coûts de fabrication et des temps de montage importants et, au final, à augmenter le prix de fabrication de l'outil.

En outre, cette solution s'avère encore relativement encombrant

Selon la technique décrite par EP-1 376 086, le capteur de couple comprend un corps intérieur avec un axe par rapport auquel un couple est à mesurer, et un corps extérieur annulaire qui entoure concentriquement le corps intérieur et qui est relié par des barrettes radiales avec le corps intérieur.

Un premier type de barrettes présente dans la direction de la circonférence une largeur relativement grande mais des dimensions axiales relativement faibles. Un deuxième type de barrettes est relativement étroit en direction de la circonférence, mais possède des dimensions axiales relativement grandes.

Des éléments de mesure pour la mesure de la torsion, sont agencés sur les barrettes.

Pour l'étalonnage d'outils de vissage, le corps annulaire est maintenu stationnaire. Les barrettes forment une première croix de quatre barrettes décalées angulairement autour de l'axe de chaque fois 90 degrés.

La deuxième croix est décalée angulairement de 45 degrés autour de l'axe par rapport à la première croix. Le corps intérieur présente un logement central coaxial à l'axe, pour l'engrènement d'un outil de vissage à tester. Des éléments de mesure sont agencés sur les quatre barrettes et sont interconnectés de telle sorte que, sous compensation des forces parasites, on obtienne une valeur de mesure pour un couple agissant autour de l'axe sur le corps intérieur.

A nouveau, le support des capteurs, avec ses corps intérieur et extérieur et ses barrettes radiales s'avère être une pièce relativement complexe et de fabrication coûteuse.

L'invention a notamment pour objectif de pallier ces inconvénients de l'art antérieur.

Plus précisément, l'invention a pour objectif de proposer une technique pour la mise en oeuvre de capteurs de couple sur les outils de vissage en vue de mesurer le couple de serrage de ceux-ci, qui n'impacte pas les dimensions des outils, ou quasiment pas.

L'invention a également pour objectif de fournir une telle technique qui puisse être mise en oeuvre avec des pièces peu coûteuses, simples à fabriquer et à monter.

L'invention a pour objectif de fournir une telle technique qui permette de réduire les temps de collage des capteurs, et les coûts correspondants.

L'invention a aussi pour objectif de fournir une telle technique qui soit simple de conception, et facile à mettre en oeuvre.

Ces objectifs; ainsi que d'autres qui apparaîtront par la suite, sont atteints grâce à l'invention qui a pour objet un outil de vissage selon la revendication 1.

De cette façon, on peut obtenir des gains importants en termes d'encombrement lié à l'espace nécessaire à la mise en place des capteurs à l'intérieur du corps de l'outil, ce dernier pouvant par conséquent présenter des dimensions réduites.

En effet, la technique selon l'invention propose une approche opposée de celle des techniques de l'art antérieur selon lesquelles le support s'étend longitudinalement (c'est-à-dire selon l'axe de révolution du moteur).

En outre, comme cela va apparaître plus clairement par la suite, le montage peut être réalisé plus facilement et plus rapidement qu'avec les supports traditionnels de l'art antérieur.

On note que l'invention s'applique tant à des visseuses à tête d'angle (telle que celle illustrée par la figure 1), mais également à des visseuses droites et/ou à poignée pistolet.

Ledit support s'étend essentiellement dans un plan sensiblement perpendiculaire audit axe de révolution.

On comprend qu'un tel support permet clairement de limiter l'encombrement lié à sa mise en place dans le corps de l'outil.

On note également qu'un support ainsi constitué facilite les opérations de collage des capteurs en ce qu'il offre une surface de montage aisément accessible, contrairement à l'art antérieur.

Par ailleurs, comparée aux solution selon lesquelles les capteurs mesurent des déformations dans un plan perpendiculaire à l'axe moteur, l'invention propose un support de capteur(s) qui peut être réalisé simplement et monté rapidement, comme cela va être explicité plus en détails par la suite.

Ledit support comprend préférentiellement au moins une branche, dite branche active, solidarisée par une de ses extrémités audit élément actif, et au moins une branche, dite branche réactive, solidarisée par une de ses extrémités audit corps.

On obtient ainsi; par l'intermédiaire des branches, des moyens d'engagement d'une part avec le corps, et d'autre part avec l'élément actif, qui sont très simples de conception et donc peu coûteux à réaliser.

Avantageusement, ladite ou lesdites branches actives et ladite ou lesdites branches réactives s'étendent partir d'un anneau présentant un évidement sensiblement centré sur ledit axe de révolution et permettant le passage d'un arbre d'entraînement.

Selon un mode de réalisation préférentiel, cet outil de vissage comprend deux branches actives et deux branches réactives, lesdites branches réactives étant préférentiellement diamétralement opposées par rapport audit anneau et formant un angle d'environ 90° avec lesdites branches actives.

Le maintien du support dans l'outil est ainsi assuré de façon satisfaisante, ceci en assurant par ailleurs un comportement optimisé des branches actives quant à leur déformation mesurable.

Préférentiellement, ledit élément actif est une couronne de réduction.

Dans ce cas, ladite ou lesdites branches actives sont avantageusement chacune encastrée dans une encoche ménagée dans ladite couronne de réduction.

Avantageusement, ladite ou lesdites branches réactives sont chacune encastrées dans une encoche ménagée dans ledit corps.

Un support ainsi structuré contribue à une grande facilité de montage dans le corps de l'outil et dans la couronne de réduction. Il suffit en effet de positionner le support sur la couronne de réduction, puis d'insérer le réducteur dans le corps de l'outil de façon que les branches réactives prennent place dans les encoches prévues à cet effet sur le corps de l'outil.

Selon une variante avantageuse, ledit support présente au moins un évidement s'étendant au moins partiellement le long de ladite ou desdites branches réactives de façon à réduire localement la raideur à l'encontre dudit couple.

En effet, dans une gamme d'outils, ceux-ci sont destinés à des plages de couple données. L'ensemble de l'outil comprend donc des parties constitutives de conception constante (par exemple, le corps, la couronne de réduction, l'arbre de sortie...), à ceci près qu'il est nécessaire d'adapter la sensibilité du capteur de couple à la plage de couple envisagée, par exemple de 0,5 à 2,5 N.m, de 1 à 5 N.m ou de 2 à 10 N.m.

La réalisation localement d'évidements sur les branches réactives, et au niveau des moyens de traduction, est donc une solution avantageuse pour adapter, autant que de besoin, la raideur des branches réactives en fonction de la plage de couple pour laquelle l'outil est conçu.

En d'autres termes, on peut réaliser un capteur dont les dimensions et/ou formes extérieures, ainsi que l'épaisseur globale (liées à l'environnement dans l'outil) sont constantes, et en adaptant localement la raideur en fonction de la plage de couple envisagée. Ceci permet d'avoir des logements de support, par exemple dans la couronne et le corps de l'outil identiques quelque soit le couple envisagé.

Bien entendu, en fonction de la plage de couple, il pourra ne pas être nécessaire de réaliser ces évidements.

On note qu'il est également possible d'adapter la raideur des branches réactives par un changement de matériau, par exemple en utilisant de l'acier (pour augmenter la raideur) ou de l'aluminium (pour une raideur moindre).

Préférentiellement, ledit évidement prend la forme d'une rainure ménagée dans l'épaisseur de ladite ou desdites branches réactives.

Avantageusement, ledit ou lesdits évidements s'étendent, selon une section transversale dudit support, selon une portion de cercle.

On peut ainsi réaliser de tels évidements aisément et de façon peu coûteuse, par une opération d'usinage, et en particulier par fraisage.

Préférentiellement, ledit support présente, de part et d'autre de chaque branche réactive, une rainure délimitée par une portion de cercle, lesdites gorges étant symétriquement réparties par rapport à l'axe longitudinal desdites branches réactives.

Avantageusement, lesdits moyens de traduction sont rapportés sur chacune desdites branches réactives.

Préférentiellement, lesdits moyens de traduction sont des jauges de contraintes.

Selon une autre caractéristique, ladite ou lesdites branches actives portent au moins une jauge de compensation de température et/ou au moins une jauge d'équilibrage desdites jauges de contrainte montées en pont.

L'invention concerne également un support d'au moins un capteur formant des moyens de mesure de couple selon le revendication 16.

Selon une solution préférée, un tel support présente une forme générale de croix à quatre branches dont au moins deux sont destinées à supporter un capteur.

D'autres caractéristiques et avantages de l'invention apparaîtront plus clairement à la lecture de la description suivante d'un mode de réalisation préférentiel de l'invention, donnés à titre d'exemples illustratifs et non limitatifs, et des dessins annexés parmi lesquels :
- la figure 1 est une vue en coupe longitudinale d'un outil de vissage selon l'art antérieur ;
- les figures 2 et 3 sont chacune une vue en coupe transversale d'un outil selon le principe général de l'invention ;
- la figure 4 est une vue isolée d'un support de capteur destiné à équiper un outil de vissage selon l'invention ;
- la figure 5 est une vue d'un mode de réalisation préférentiel du support de capteur destiné à équiper un outil de vissage selon l'invention ;
- la figure 6 est une vue isolée du support de capteur illustrée par la figure 5 ;
- la figure 7 est une vue du support de capteur selon la coupe F-F indiquée sur la figure 6 ;
- la figure 8 est une vue du support de capteur selon la coupe G-G indiquée sur la figure 7 ;
- la figure 9 est une vue du deuxième mode de réalisation du support de capteur monté à l'intérieur du corps de l'outil ;
- la figure 10 est une vue éclatée d'un corps, d'un réducteur et d'un support de capteur selon le deuxième mode de réalisation illustré par la figure 6 ;
- la figure 11 est une vue en coupe longitudinale d'un outil de vissage selon une variante de réalisation de l'invention ;
- la figure 12 est une vue en coupe transversale de l'outil illustré par la figure 11 ;
- la figure 13 est une vue isolée d'un support de capteur selon une variante de réalisation.

Tel qu'indiqué précédemment, le principe de l'invention réside dans le fait de monter dans un outil de vissage un capteur de couple, ou plusieurs, de façon qu'ils détectent des déformations représentatives du couple de serrage dans un plan transversal par rapport à l'axe de révolution d'un organe tournant dans le corps de l'outil, ceci avec un encombrement minimal.

Selon une autre présentation globale de l'invention, le support de capteur de couple intégré à l'outil se caractérise par au moins :
- une première portion périphérique liée au corps de l'outil ;
- une deuxième portion périphérique liée à un organe de transmission exposé au couple de réaction ;
- une portion déformante, plate, portant des moyens de traduction des déformations de ladite portion, tels que des jauges de contrainte.

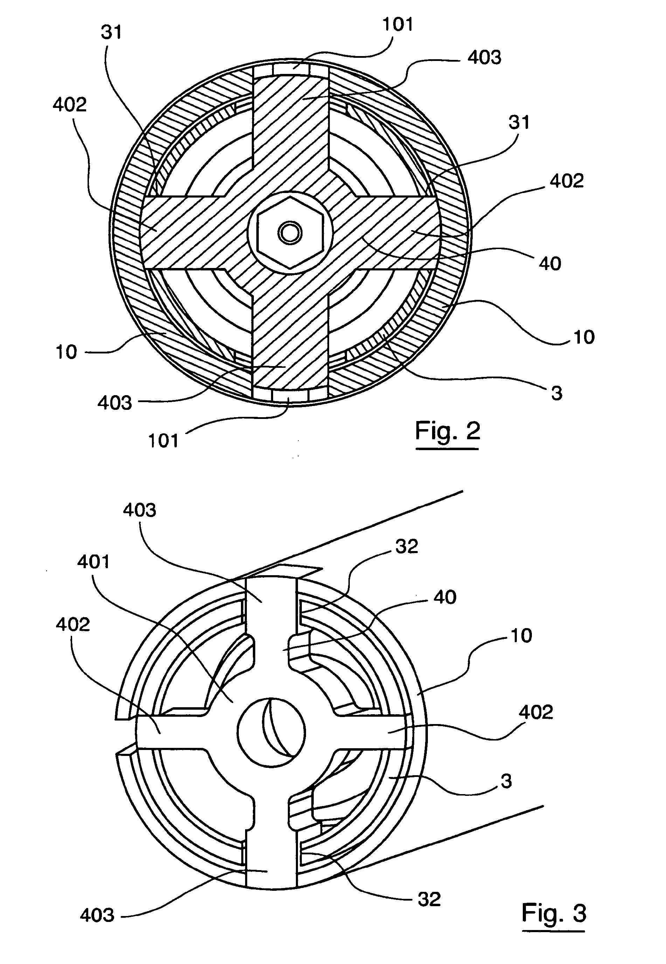

Tel que cela apparaît sur les figures 2 et 3, ceci est obtenu en mettant en oeuvre un support 40 prévu pour s'étendre essentiellement dans un plan perpendiculaire à l'axe de révolution de l'arbre moteur de l'outil, celui-ci coïncidant avec l'axe longitudinal 100 du corps de l'outil.

Selon le présent mode de réalisation, le support 40 prend la forme d'une pièce plate présentant quatre branches réparties à 90° autour d'un anneau central 401 présentant un alésage central permettant le passage de l'arbre d'entrée d'une tête d'angle (dans le cas d'une visseuse d'angle), ou permettant le passage de l'arbre de sortie de la visseuse (dans le cas d'une visseuse droite).

Parmi les quatre branches du support 40, deux branches 402 (dites branches actives) diamétralement opposées par rapport à l'anneau 401 sont solidaires de la couronne de réduction 3 décrite précédemment en référence à l'art antérieur.

La couronne 3 forme ainsi un élément actif susceptible de transmettre, sous forme d'une déformation, le couple de serrage à mesurer, comme cela va être explicité plus en détail par la suite.

Pour cela, la couronne 3 présente une paire d'encoches 31 diamétralement opposées et formant logement pour l'extrémité des branches actives 402 du support 40 (ou plus généralement, pour une première portion périphérique du support).

Les deux autres branches 403 (dites branches réactives) sont quant à elles solidaires du corps 10 de l'outil, le corps 10 présentant une paire d'encoches 101 diamétralement opposées et formant des logements pour les branches réactives 403 (ou plus généralement, pour une deuxième portion périphérique du support).

On note que la couronne 3 présente deux encoches 32 permettant le passage des branches réactives 403, ces encoches étant dimensionnées de façon à présenter un jeu avec les branches réactives 403 évitant tout contact de la couronne avec les branches réactives, ceci pour éviter une perturbation de la mesure par contact des branches réactives avec la couronne.

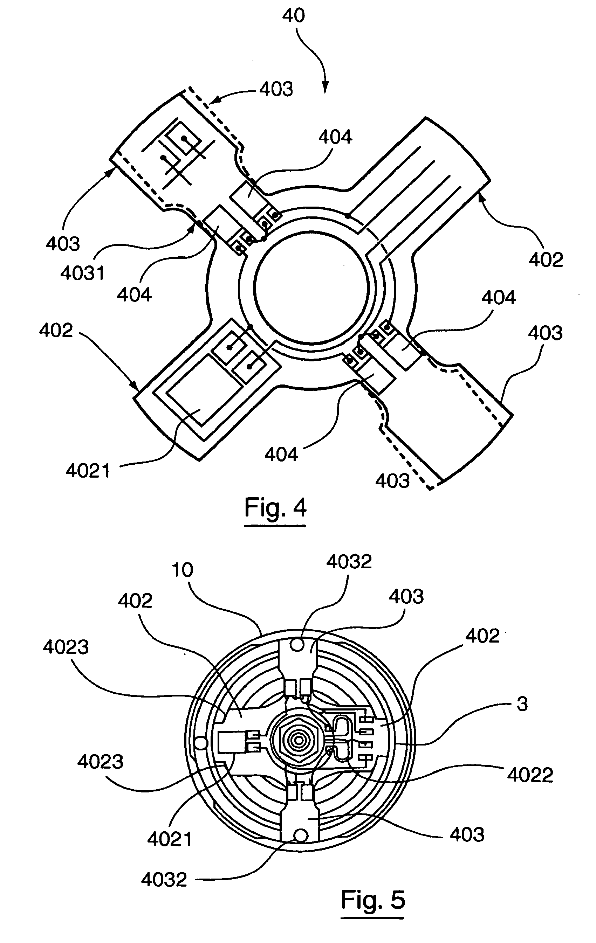

Par ailleurs, en référence à la figure 4, le capteur de couple comprend des jauges de contrainte 404.

Selon le présent mode de réalisation, une paire de jauge de contraintes 404 est rapportée sur chacune des branches réactives 403.

Le fonctionnement du support 40 qui vient d'être décrit va maintenant être explicité.

Lorsqu'une opération de vissage atteint le stade de serrage, une unité de commande, qui reçoit les données relatives au couple de serrage, pilote l'arrêt du moteur.

Du fait de l'action du moteur, les satellites du réducteur exercent un effort sur la couronne. Cette dernière étant solidaire du support 40 par l'intermédiaire des branches actives 402, tente de faire tourner le support en lui transmettant un couple.

Ce couple se traduit par une déformation des branches réactives 403 solidaires du corps de l'outil. Cette déformation (volontairement exagérée à des fins de clarté) est symbolisée par la position représentée en traits pointillés des branches 403.

Cette déformation est alors mesurée par les jauges de contraintes 404, le couple de serrage étant déterminé à partir de cette mesure et retransmise à une unité de commande qui pilote l'arrêt du moteur lorsque le couple de serrage atteint une valeur prédéterminée.

Les figures 5 à 10 illustrent un mode de réalisation préférentiel du support du capteur.

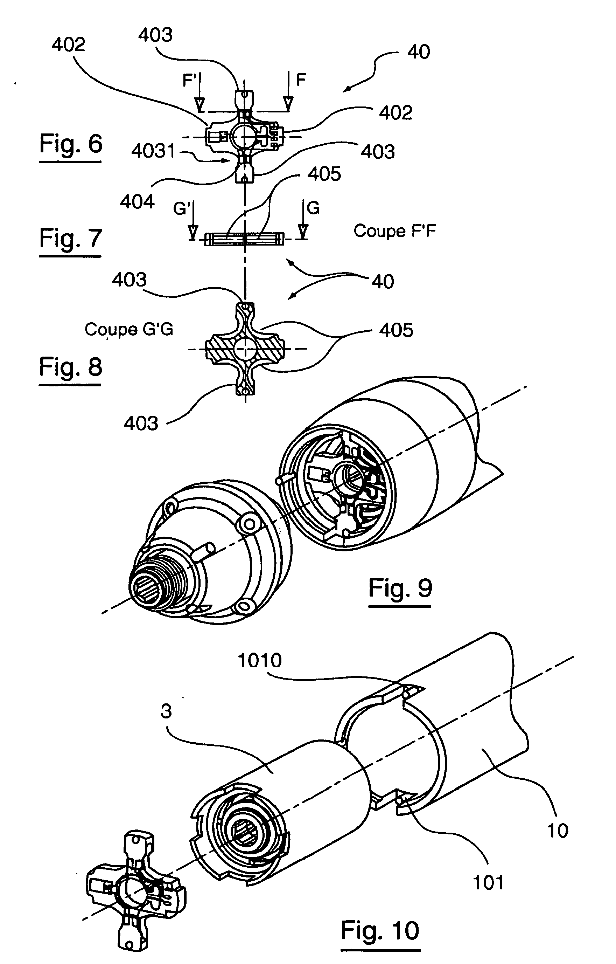

En référence aux figures 5 et 6, le support selon ce mode de réalisation se présente également sous forme d'une croix à quatre branches : deux branches actives 402 destinées à être solidarisées à un élément actif 3 (en l'occurrence une couronne de réduction dans laquelle sont ménagés des logements dans lesquels les branches réactives viennent s'emboîter), et deux branches réactives 403 dont les extrémités sont destinées à être engagées dans des encoches ménagées dans le corps 10 de l'outil.

Par ailleurs, tel que cela apparaît sur les figures 7 et 8, on réalise des rainures 405 dans l'épaisseur du support 40, de façon à adapter localement la raideur des branches réactives à l'encontre du couple sur une plage prédéfinie.

Selon le présent mode de réalisation, on remarque, sur la vue en coupe transversale G-G du support 40 illustrée par la figure 8, que les rainures 405 s'étendent d'une branche active à une branche réactive, ceci correspondant à un usinage réalisée par fraisage.

Tel que cela apparaît sur la figure 8, une rainure 405 est réalisée de part et d'autre de chaque branche réactive 403, les rainures 402 étant disposées symétriquement par rapport à l'axe longitudinal des branches réactives.

On note, tel qu'illustré par les figures 3 à 6, que la largeur des branches réactives 403, dans la zone de collage 4031 (formant portion plate déformante du support) des jauges de contrainte 404, est adaptée à la largeur de contraintes, de telle sorte que, en étant placées au plus près des bords de la zone de collage, les jauges de contraintes se trouvent dans une zone déformation maximale.

On note également que les branches actives 402 portent l'une une jauge de compensation de température 4021 et l'autre une jauge d'équilibrage 4022 des jauges de contrainte montées en pont.

On note par ailleurs que les branches réactives 403 présentent chacune un orifice 4032 destiné à recevoir chacun une aiguille 1010 solidaire du corps de l'outil (figure 10).

Ainsi, lorsque le support est monté dans l'outil tel qu'illustré par la figure 9, les aiguilles 1010 sont encastrées dans les orifices des branches réactives, assurant ainsi le positionnement rigoureux du support par rapport au corps de l'outil.

Par ailleurs, les branches actives 402 présentent chacune à leur extrémité deux épaulements 4023 répartis symétriquement, et conçus pour assurer le positionnement rigoureux du support par rapport à la couronne 3.

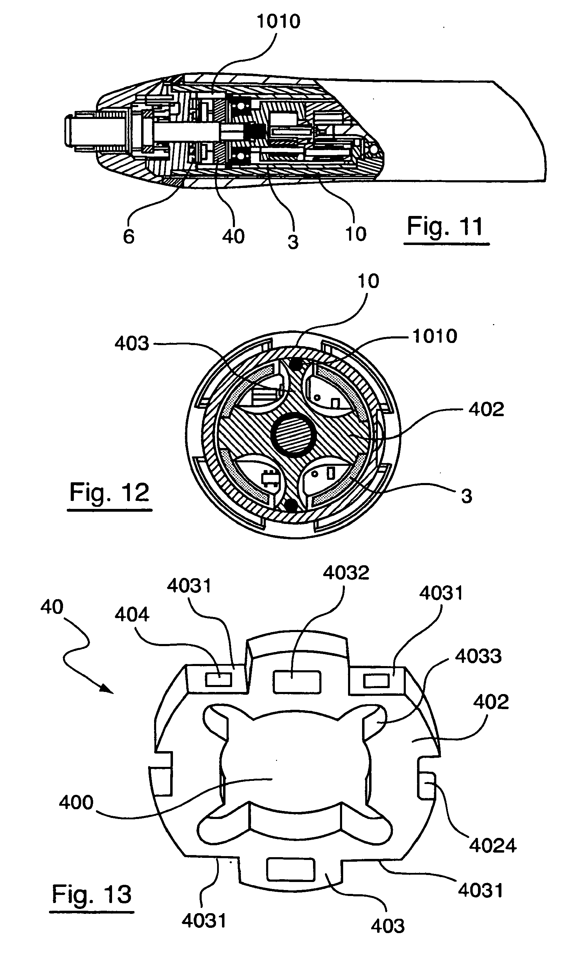

Les figures 11 et 12 illustrent un outil de vissage équipé d'un capteur selon l'invention, respectivement selon une coupe partielle longitudinale, et selon une coupe transversale.

Tel que cela apparaît, le support 40 du capteur est couplé par ses branches actives 402 à la couronne de réduction 3 par encastrement dans des encoches de la couronne.

Selon la présente variante de réalisation, les branches réactives 403 sont couplées au corps 10 directement par l'intermédiaire d'aiguilles 1010 (sans que les branches pénètrent des encoches ménagées sur le corps).

On note en outre le montage, à proximité du support 40 du capteur de couple, d'une carte électronique 6 de numérisation du signal du capteur de couple.

La figure 13 illustre un support 40 de capteur de couple selon un autre mode de réalisation.

Tel que cela apparaît, le support 40 présente deux extrémités actives 402 (équivalentes aux branches actives décrites précédemment) et deux extrémités réactives 403 (équivalentes aux branches réactives décrites précédemment).

Les extrémités 402 présentent chacune un évidement 4024 formant organe d'accouplement femelle avec un élément actif (tel qu'une couronne de réduction) présentant des organes mâles de forme correspondante.

Les extrémités réactives 403 présentent quant à elles chacune un orifice 4032 destiné à recevoir un organe de solidarisation du support avec le corps de l'outil (de façon équivalente aux aiguilles 1010 décrites précédemment).

Par ailleurs, le support 40 présente un évidement central 400 (formant passage pour l'arbre moteur de l'outil), cet évidemment présentant des extensions radiales 4033.

Parallèlement, des portions plates 4031 s'étendent à la base des extrémités réactives 403, dans l'épaisseur du support.

Les extensions radiales 4033 de l'évidement central s'étendent en direction des portions plates 4031, de façon à rendre des portions plates 4031 déformables lorsque le support est sous la contrainte d'un couple s'exerçant sur les branches actives.

Des jauges de contrainte 404 sont collées sur chacune des portions plates 4031 et sont reliées par tout moyen approprié à des moyens de traitement de signal que ces jauges émettent.

## Revendications

1. Outil de vissage comprenant un corps (10) à l'intérieur duquel est monté au moins un élément tournant (1), (12), (22), (5) autour d'un axe de révolution, ledit outil intégrant au moins un capteur de couple du type comprenant des moyens de traduction des variations d'une grandeur physique représentative de la déformation d'un support (40) sur lequel sont rapportés lesdits moyens de traduction (404), ledit ou lesdits capteurs étant montés de façon à mesurer des déformations dans un plan sensiblement perpendiculaire audit axe de révolution, ledit support (40) s'étendant essentiellement dans un plan sensiblement perpendiculaire audit axe de révolution,
**caractérise en ce que** ledit support (40) comprenant au moins un élément plat présentant :
- un élément d'extrémité s'étendant radialement en s'éloignant dudit axe de révolution et solidaire d'un élément actif (3) susceptible de transmettre ledit couple à mesurer ;
- un autre élément d'extrémité s'étendant radialement en s'éloignant dudit axe de révolution et solidaire dudit corps (10).

2. Outil de vissage selon la revendication 1, **caractérisé en ce que** ledit support (40) comprend au moins une branche, dite branche active (402), solidarisée par une de ses extrémités audit élément actif (3), (6) et au moins une branche, dite branche réactive (403), solidarisée par une de ses extrémités audit corps (10).

3. Outil de vissage selon la revendication 2, **caractérisé en ce que** ladite ou lesdites branches actives (402) et ladite ou lesdites branches réactives (403) s'étendent partir d'un anneau (401) présentant un évidement sensiblement centré sur ledit axe de révolution et permettant le passage d'un arbre d'entraînement.

4. Outil de vissage selon la revendication 3, **caractérisé en ce qu'**il comprend deux branches actives (402) et deux branches réactives (403).

5. Outil de vissage selon la revendication 4, **caractérisé en ce que** lesdites branches réactives (403) sont diamétralement opposées par rapport audit anneau (401), et forment un angle d'environ 90° avec lesdites branches actives (402).

6. Outil de vissage selon l'une quelconque des revendications 1 à 5, **caractérisé en ce que** ledit élément actif (3) est une couronne de réduction.

7. Outil de vissage selon les revendications 2 et 6, **caractérisé en ce que** ladite ou lesdites branches actives (402) sont chacune encastrées dans une encoche (31) ménagée dans ladite couronne de réduction.

8. Outil de vissage selon l'une quelconque des revendications 2 à 7, **caractérisé en ce que** ladite ou lesdites branches réactives (403) sont chacune encastrées dans une encoche (101) ménagée dans ledit corps (10).

9. Outil de vissage selon l'une quelconque des revendications 2 à 8, **caractérisé en ce que** ledit support présente au moins un évidement s'étendant au moins partiellement le long de ladite ou desdites branches réactives de façon à adapter localement leur raideur à l'encontre dudit couple sur une plage prédéfinie.

10. Outil de vissage selon la revendication 9, **caractérisé en ce que** ledit évidement prend la forme d'une rainure ménagée dans l'épaisseur de ladite ou desdites branches réactives.

11. Outil de vissage selon l'une des revendications 9 et 10, **caractérisé en ce que** ledit ou lesdits évidements s'étendent, selon une section transversale dudit support, selon une portion de cercle.

12. Outil de vissage selon les revendications 10 et 11, **caractérisé en ce que** ledit support présente, de part et d'autre de chaque branche réactive, une rainure délimitée par une portion de cercle, lesdites rainures étant symétriquement réparties par rapport à l'axe longitudinal desdites branches réactives.

13. Outil de vissage selon l'une quelconque des revendications 2 à 12, **caractérisé en ce que** lesdits moyens de traduction sont rapportés sur chacune desdites branches réactives (403).

14. Outil de vissage selon la revendication 13, **caractérisé en ce que** lesdits moyens de traduction (404) sont des jauges de contraintes.

15. Outil de vissage selon l'une des revendications 13 et 14, **caractérisé en ce que** ladite ou lesdites branches actives portent au moins une jauge de compensation de température (4021) et/ou au moins une jauge d'équilibrage (4022) desdites jauges de contrainte montées en pont.

16. Support (40) d'au moins un capteur (404) formant des moyens de mesure de couple du type comprenant des moyens de traduction des variations d'une grandeur physique représentative de la déformation dudit support (40), ledit support étant destiné à équiper un outil de vissage comprenant un corps (10) à l'intérieur duquel est monté au moins un élément tournant (1), (12), (22), (5) autour d'un axe de révolution, ledit support étant destiné à s'étendre essentiellement dans un plan sensiblement perpendiculaire audit axe de révolution, ledit ou lesdits capteurs étant destinés à être montés de façon à mesurer des déformations dans un plan sensiblement perpendiculaire audit axe de révolution, **caractérisé en ce que** ledit support (40) comprenant au moins un élément plat présentant :
- un élément d'extrémité s'étendant radialement en s'éloignant dudit axe de révolution et formant un moyen d'engagement avec un élément actif (3) susceptible de transmettre ledit couple à mesurer ;
- un autre élément d'extrémité s'étendant radialement en s'éloignant dudit axe de révolution et formant un moyen d'engagement avec ledit corps (10).

17. Support selon la revendication 16, **caractérisé en ce qu'**il présente une forme générale de croix à quatre branches dont au moins deux sont destinées à supporter lesdits moyens de traduction (404).

## Claims

1. Screwing tool comprising a body (10) inside which there is mounted at least one element (1), (12), (22), (5) which rotates about an axis of rotation, the tool containing at least one torque sensor of the type comprising means for translating the variations of a physical value representative of the deformation of a support (40), to which there are fitted the translation means (404), the sensor(s) being mounted so as to measure deformations in a plane substantially perpendicular relative to the axis of rotation, the support (40) substantially extending in a plane substantially perpendicular relative to the axis of rotation, **characterised in that** the support (40) comprising at least one planar element has:
- an end element which extends radially away from the axis of rotation and which is fixedly joined to an active element (3) which is capable of transmitting the torque to be measured;
- another end element which extends radially away from the axis of rotation and which is fixedly joined to the body (10).

2. Screwing tool according to claim 1, **characterised in that** the support (40) comprises at least one branch, which is referred to as the active branch (402) and which is fixedly joined by one of its ends to the active element (3), (6), and at least one branch, which is referred to as the reactive branch (403) and which is fixedly joined by one of its ends to the body (10).

3. Screwing tool according to claim 2, **characterised in that** the active branch(es) (402) and the reactive branch(es) (403) extend from a ring (401) which has a recess which is substantially centred on the axis of rotation and which allows the passage of a drive shaft.

4. Screwing tool according to claim 3, **characterised in that** it comprises two active branches (402) and two reactive branches (403).

5. Screwing tool according to claim 4, **characterised in that** the reactive branches (403) are diametrically opposed relative to the ring (401) and form an angle of approximately 90° with the active branches (402).

6. Screwing tool according to any one of claims 1 to 5, **characterised in that** the active element (3) is a step-down ring.

7. Screwing tool according to claim 2 and claim 6, **characterised in that** the active branch(es) (402) is/are each fitted in a recess (31) provided in the step-down ring.

8. Screwing tool according to any one of claims 2 to 7, **characterised in that** the reactive branch(es) (403) is/are each fitted in a recess (101) provided in the body (10).

9. Screwing tool according to any one of claims 2 to 8, **characterised in that** the support has at least one recess which extends at least partially along the reactive branch(es) in order to locally adapt their stiffness counter to the torque over a predefined range.

10. Screwing tool according to claim 9, **characterised in that** the recess is in the form of a groove which is provided in the thickness of the reactive branch(es).

11. Screwing tool according to either claim 9 or claim 10, **characterised in that** the recess(es) extend(s), along a cross-section of the support, in accordance with a circular portion.

12. Screwing tool according to claim 10 and claim 11, **characterised in that** the support has, at one side and the other of each reactive branch, a groove which is delimited by a circular portion, the grooves being symmetrically distributed relative to the longitudinal axis of the reactive branches.

13. Screwing tool according to any one of claims 2 to 12, **characterised in that** the translation means are fitted to each of the reactive branches (403).

14. Screwing tool according to claim 13, **characterised in that** the translation means (404) are resistance strain gauges.

15. Screwing tool according to either claim 13 or claim 14, **characterised in that** the active branch(es) carry/ies at least one temperature compensation gauge (4021) and/or at least one balancing gauge (4022) for the resistance strain gauges mounted in a bridge-like manner.

16. Support (40) for at least one sensor (404) which forms torque measuring means of the type comprising means for translating the variations of a physical value representative of the deformation of the support (40), the support being intended to be provided for a screwing tool comprising a body (10) inside which there is mounted at least one element (1), (12), (22), (5), which rotates about an axis of rotation, the support being intended to extend substantially in a plane substantially perpendicular relative to the axis of rotation, the sensor(s) being intended to be mounted so as to measure deformations in a plane substantially perpendicular relative to the axis of rotation, **characterised in that** the support (40) comprising at least one planar element has:
- an end element which extends radially away from the axis of rotation and which forms a means for engagement with an active element (3) which is capable of transmitting the torque to be measured;
- another end element which extends radially away from the axis of rotation and which forms a means for engagement with the body (10).

17. Support according to claim 16, **characterised in that** it is generally in the form of a cross having four branches, at least two of which are intended to support the translation means (404).

## Patentansprüche

1. Schraubwerkzeug mit einem Körper (10), in dessen Inneren mindestens ein um eine Drehachse drehbares Element (1), (12), (22), (5) angebracht ist, wobei das besagte Werkzeug mindestens einen Drehmomentfühler von der Art aufweist, die Mittel zum Übersetzen der Variationen einer physikalischen Größe umfasst, die für die Deformation eines Trägerelementes (40) repräsentativ ist, auf dem die besagten Mittel zum Übersetzen (404) angebracht sind, wobei der oder die besagten Fühler so angebracht sind, dass sie Deformationen in einer Ebene messen können, die in etwa senkrecht zur besagten Drehachse liegt, wobei das besagte Trägerelement (40) sich im Wesentlichen in einer Ebene erstreckt, die in etwa senkrecht zur besagten Drehachse liegt,
**dadurch gekennzeichnet, dass** das besagte Trägerelement (40) mindestens ein flaches Element enthält, welches folgendes umfasst:
- ein Endelement, das sich radial weg von der besagten Drehachse erstreckt und mit einem aktiven Element (3) verbunden ist, das in der Lage ist, das besagte zu messende Drehmoment zu übertragen;
- ein anderes Endelement, das sich radial weg von der besagten Drehachse erstreckt und mit dem besagten Körper (10) verbunden ist.

2. Schraubwerkzeug nach Anspruch 1, **dadurch gekennzeichnet, dass** das besagte Trägerelement (40) mindestens einen Zweig, genannt aktiver Zweig (402), aufweist, der an einem seiner Enden mit dem besagten aktiven Element (3), (6) verbunden ist und mindestens einen Zweig, genannt reaktiver Zweig (403), der an einem seiner Enden mit dem besagten Körper (10) verbunden ist.

3. Schraubwerkzeug nach Anspruch 2, **dadurch gekennzeichnet, dass** der besagte oder die besagten aktiven Zweige (402) und der besagte reaktive oder die besagten reaktiven Zweige (403) sich von einem Ring (401) ausgehend erstrecken, der eine in etwa um die besagte Drehachse zentrierte Aussparung aufweist und den Durchgang einer Antriebswelle zulässt.

4. Schraubwerkzeug nach Anspruch 3, **dadurch gekennzeichnet, dass** es zwei aktive Zweige (402) und zwei reaktive Zweige (403) aufweist.

5. Schraubwerkzeug nach Anspruch 4, **dadurch gekennzeichnet, dass** die besagten reaktiven Zweige (403) diametral entgegengesetzt im Verhältnis zum besagten Ring (401) liegen und einen Winkel von etwa 90° mit den besagten aktiven Zweigen (402) bilden.

6. Schraubwerkzeug nach einem der Ansprüche 1 bis 5, **dadurch gekennzeichnet, dass** das besagte aktive Element (3) ein Untersetzungsring ist.

7. Schraubwerkzeug nach den Ansprüchen 2 und 6, **dadurch gekennzeichnet, dass** der besagte aktive oder die besagten aktiven Zweige (402) jeweils in eine in dem besagten Untersetzungsring eingearbeitete Einkerbung (31) eingebettet sind.

8. Schraubwerkzeug nach einem der Ansprüche 2 bis 7, **dadurch gekennzeichnet, dass** der besagte oder die besagten reaktiven Zweige (403) jeweils in eine in dem besagten Körper (10) eingearbeitete Einkerbung (101) eingebettet sind.

9. Schraubwerkzeug nach einem der Ansprüche 2 bis 8, **dadurch gekennzeichnet, dass** das besagte Trägerelement mindestens eine Aussparung aufweist, die sich mindestens teilweise entlang des besagten reaktiven oder der besagten reaktiven Zweige erstreckt, um deren Starrheit örtlich dem besagten Drehmoment über einen im Voraus festgelegten Bereich anzupassen.

10. Schraubwerkzeug nach Anspruch 9, **dadurch gekennzeichnet, dass** die besagte Aussparung die Form einer in der Materialstärke des besagten oder der besagten reaktiven Zweige eingelassenen Nut annimmt.

11. Schraubwerkzeug nach einem der Ansprüche 9 oder 10, **dadurch gekennzeichnet, dass** die besagte oder die besagten Aussparungen sich nach einem Querschnitt des besagten Trägerelementes nach einem Teil eines Kreises erstrecken.

12. Schraubwerkzeug nach den Ansprüchen 10 und 11, **dadurch gekennzeichnet, dass** das besagte Trägerelement auf jeder Seite eines jeden reaktiven Zweiges eine Nut aufweist, die durch einen Teil eines Kreises begrenzt ist, wobei die besagten Nuten symmetrisch im Verhältnis zur Längsachse der besagten reaktiven Zweige verteilt sind.

13. Schraubwerkzeug nach einem der Ansprüche 2 bis 12, **dadurch gekennzeichnet, dass** die besagten Mittel zum Übersetzen auf jedem der besagten reaktiven Zweige (403) aufgesetzt sind.

14. Schraubwerkzeug nach Anspruch 13, **dadurch gekennzeichnet, dass** es sich bei den besagten Mitteln zum Übersetzen (404) um Dehnungsmessstreifen handelt.

15. Schraubwerkzeug nach einem der Ansprüche 13 oder 14, **dadurch gekennzeichnet, dass** der besagte oder die besagten aktiven Zweige mindestens eine Messvorrichtung zum Temperaturausgleich (4021) und/oder mindestens eine Ausgleichsmessvorrichtung (4022) der besagten, als Brücke angebrachten Dehnungsmessstreifen, tragen.

16. Trägerelement (40) für mindestens einen Fühler (404), der Mittel zum Messen eines Drehmomentes bildet, von der Art, die Mittel zum Übersetzen der Variationen einer physikalischen Größe umfasst, welche für die Deformation des besagten Trägerelementes (40) repräsentativ ist, wobei das besagte Trägerelement als Ausstattung eines Schraubwerkzeugs eingesetzt wird, das einen Körper (10) aufweist, in dessen Inneren mindestens ein um eine Drehachse drehbares Element (1), (12), (22), (5) angebracht ist, wobei das besagte Trägerelement sich im Wesentlichen in einer Ebene erstreckt, die in etwa senkrecht zur besagten Drehachse steht, wobei der besagte oder die besagten Fühler so angebracht werden sollen, dass sie Deformationen in einer Ebene messen kann/können, die in etwa senkrecht zur besagten Drehachse liegt,
**dadurch gekennzeichnet, dass** das besagte Trägerelement (40) mindestens ein flaches Element enthält, welches folgendes umfasst:
- ein Endelement, das sich radial weg von der besagten Drehachse erstreckt und ein Mittel zum Einrasten mit einem aktiven Element (3) bildet, das in der Lage ist, das besagte zu messende Drehmoment zu übertragen;
- ein anderes Endelement, das sich radial weg von der besagten Drehachse erstreckt und ein Mittel zum Einrasten mit dem besagten Körper (10) bildet.

17. Trägerelement nach Anspruch 16, **dadurch gekennzeichnet, dass** es die allgemeine Form eines Kreuzes mit vier Armen aufweist, von denen mindestens zwei die besagten Mittel zum Übersetzen (404) tragen sollen.
